# EUROPÄISCHE PATENTSCHRIFT

(11) **EP 4 302 964 B1**
(45) Veröffentlichungstag und Bekanntmachung des Hinweises auf die Patenterteilung: **16.10.2024**
(21) Anmeldenummer: 23173412.0
(22) Anmeldetag: 15.05.2023
(51) Int. Cl.: B29C 49/42, B29C 49/04, B29L 9/00, B29L 31/00, B26D 1/06, B65D 25/16, B65D 77/06, B65D 83/00

(54) **VERFAHREN ZUR HERSTELLUNG EINES VERWENDUNGSFÄHIGEN BEHÄLTERS BESTEHEND AUS EINEM STEIFEN AUSSENBEHÄLTER UND EINEM VERFORMBAREN INNENBEUTEL**
METHOD FOR MAKING A CONTAINER WHICH CAN BE USED AND WHICH COMPRISES A RIGID OUTER CONTAINER AND A DEFORMABLE INNER BAG
PROCÉDÉ DE FABRICATION D'UN RÉCIPIENT UTILISABLE COMPRENANT UN RÉCIPIENT EXTERNE RIGIDE ET UN SAC INTERNE DÉFORMABLE

(30) Priorität: 07.07.2022 DE 102022116966
(43) Veröffentlichungstag der Anmeldung: 10.01.2024
(73) Patentinhaber: Gaplast GmbH, 82442 Altenau (DE)
(72) Erfinder: Kneer, Stephan, 82490 Farchant (DE); Yilginc, Kasim, 82487 Oberammergau (DE); Tschirkow, Johannes, 82362 Weilheim (DE); Schierlein, Randolf, 86971 Peiting (DE); Haseidl, Maximilian, 82435 Bad Kohlgrub (DE)
(74) Vertreter: Flosdorff, Jürgen

(56) Entgegenhaltungen:
- DE-U1- 202021 103 382
- US-A- 5 567 377
- US-A1- 2009 039 549

## Beschreibung

Die Erfindung betrifft ein Verfahren zur Herstellung eines verwendungsfähigen Behälters bestehen aus einem steifen Außenbehälter und einem verformbaren Innenbeutel, wobei ein erster Schneckenförderer einen ersten thermoplastischen Kunststoff für den Außenbehälter und wenigstens ein zweiter Schneckenförderer wenigstens einen zweiten thermoplastischen Kunststoff für den Innenbeutel einem Extruder zuführen, der einen Vorformling koextrudiert, der zwischen den geöffneten Hälften einer Blasform einer Blasanlage angeordnet wird, wobei die Blasform geschlossen wird, wenn der Vorformling die zur Herstellung eines Behälters erforderliche Länge hat, wobei Überschussmaterial im Bodenbereich des herzustellenden Behälters abgequetscht und ein Steg aus Material des Außenbehälters ausgebildet wird, in dem die verschweißte Bodennaht des Innenbeutels eingeklemmt ist, und wobei der Vorformling durch ein Druckmedium zur Anlage an die Wandung der Blasform aufgeblasen, das überschüssige Material unter der Schweißnaht abgeschlagen und der Behälter aus der Blasform entnommen wird.

Ein derartiges Verfahren ist seit längerem bekannt, wobei Wandöffnungen in dem Außenbehälter beispielsweise durch einen Hohlmesserschnitt ausgebildet werden. Durch diese Wandöffnungen strömt bei Abgabe von Behälterinhalt aus dem Innenbeutel Umgebungsluft in den Zwischenraum zwischen dem Außenbehälter und dem Innenbeutel zum Druckausgleich ein, so dass sich der Innenbeutel zusammenziehen kann.

Die verschiedenartigen thermoplastischen Kunststoffe des Außenbehälters und des Innenbeutels gehen zwar keine Schweißverbindung miteinander ein, sie haften aber aneinander, wenn der Behälter nach dem oben beschriebenen Verfahren im Koextrusionsverfahren hergestellt wird. Bevor ein derartiger Behälter verwendungsfähig ist, d.h. mit einem flüssigen oder beispielsweise pastösen Behälterinhalt gefüllt wird, der dann z.B. mittels einer Airlesspumpe oder durch Zusammendrücken des Behälters allmählich abgegeben wird, muss der Innenbeutel von der Wand des Außenbehälters abgelöst und dann wieder an diese angelegt werden. Dies kann dadurch erfolgen, dass durch die Behälteröffnung ein Unterdruck auf den Innenbeutel aufgebracht wird, der sich daraufhin schlagartig zusammenzieht. Anschließend kann durch die Behälteröffnung Druckluft in den Innenbeutel eingeführt werden, um diesen wieder an den Außenbehälter anzulegen. Wenn der Innenbeutel dabei nicht weitgehend gleichmäßig von der Wand des Außenbehälters abgelöst wird, tritt trotz Druckausgleichsöffnungen in der Wand des Außenbehälters in dem Innenbeutel bei Abgabe von Füllmaterial ein verhältnismäßig großer Unterdruck auf, wodurch die Funktionsfähigkeit einer meist vorgesehenen Pumpe beeinträchtigt werden kann. In diesem Fall kann ein Teil des Füllmaterials nicht ausgebracht werden.

DE 20 2021 103382 U1 offenbart ein Verfahren, bei dem Stifte durch zwei Löcher eines Behälters eingeführt werden, die frontal auf den in dem Behälter angeordneten Innenbeutel auftreffen, um diesen von der Behälterwand weg zu drücken. Bei diesem Vorgang werden die zwischen dem Innenbeutel und der Behälterwand wirkenden Adhäsionskräfte nur geringfügig aufgehoben, so dass ein beträchtlicher Überdruck von außen durch die Löcher auf den Innenbeutel ausgeübt werden muss, um den Innenbeutel von der Innenwand des Behälters abzulösen.

US 2009/0039549 A1 offenbart ebenfalls ein Verfahren, bei dem in der Wand eines Außenbehälters Löcher ausgebildet werden, und zwar durch einen Bohrer oder eine Nadel. Nach Durchdringung der Wand des Außenbehälters wird durch den Bohrer oder die Nadel ein Druckmedium gegen den Innenbeutel geblasen, bis ein vorbestimmter Grenzwert in dem Innenbeutel gemessen wird. Auch hier wird demnach der Innenbeutel durch ein Medium zurückgedrückt.

US 5 567 377 A offenbart einen Behälter mit Innenbeutel, bei dem der Innenbeutel mit Hilfe eines Klebemittels an dem Außenbehälter stellenweise festgeklebt ist.

Die bisher bekannten Verfahren zum Ablösen des Innenbeutels von der Behälterwand und des anschließenden Anlegens an die Wand des Außenbehälters sind aufwändig und erhöhen die Herstellungszeit gebrauchsfähiger Behälter der betrachteten Art. Außerdem hat sich herausgestellt, dass bei flaschenförmigen Behältern im Schulterbereich Probleme mit dem Ablösen auftreten können.

Der vorliegenden Erfindung liegt die Aufgabe zugrunde, ein Verfahren anzugeben, mit dem der Ablösevorgang des Innenbeutels mit größerer Zuverlässigkeit und einem geringerem Zeitaufwand erfolgt.

Diese Aufgabe wird erfindungsgemäß durch die Verfahrensschritte des Patentanspruchs 1 gelöst.

Vorteilhafte Ausgestaltungen der Erfindung sind in den Unteransprüchen gekennzeichnet.

Die Erfindung sieht vor, dass in einem ersten Schritt wenigstens zwei vorzugsweise diametral gegenüber liegende Löcher am unteren Randbereich des Schulterabschnitts in den Außenbehälter geschnitten werden. Dies kann mit einem entlang einer Kreisbahn ausgeführten Hohlmesserschnitt erfolgen, bei dem sichergestellt ist, dass der Innenbeutel hierdurch nicht verletzt wird. Die beiden Löcher liegen sich vorzugsweise diametral gegenüber, können aber auch abweichend von den 180° zueinander versetzt sein.

Als nächsten Schritt sieht die Erfindung vor, dass Stifte durch die Löcher vorzugsweise vertikal zwischen den Innenbeutel und den Außenbehälter eingeführt werden, um den Innenbeutel von der Innenwand des Außenbehälters anzulösen. Der Begriff "anzulösen" bezieht sich auf die kleine Fläche, in der die Stifte den Innenbeutel mechanisch von dem Außenbehälter abheben. Zweckmäßigerweise werden zwei Stifte auf diese Weise durch die zwei Löcher eingeführt.

Als nächsten Schritt sieht die Erfindung vor, dass ein Überdruck von außen durch die Löcher auf den Innenbeutel ausgeübt und/oder ein Unterdruck in dem Innenbeutel erzeugt wird, um den Innenbeutel großflächig oder ganzflächig von der Innenwand des Außenbehälters abzulösen. Dabei hat sich überraschenderweise gezeigt, dass dieser Ablösevorgang nach dem "Anlösen" durch die Stifte erheblich schneller und in einem einmaligen Zyklus erfolgen kann, während bei dem herkömmlichen Verfahren ohne "Anlösen" eine erheblich längere Einwirkung von Überdruck oder Unterdruck erforderlich ist. Außerdem bewirkt das erfindungsgemäße Verfahren in dem besonders schwierigen Schulterbereich ein zuverlässiges ganzflächiges Ablösen des Innenbeutels.

Die Stifte werden vorzugsweise vertikal eingeführt, wobei sie aber auch im Winkel zur vertikalen zwischen dem Innenbeutel und den Außenbehälter eingeführt werden können.

Die Stifte werden nur eine kurze Strecke, vorzugsweise etwa fünf bis fünfzehn Millimeter, zwischen dem Innenbeutel und dem Außenbehälter eingeführt, wobei die optimale Einführtiefe u.a. von der Flaschengröße abhängt. Die optimale Tiefe läßt sich leicht durch Versuche ermitteln.

Damit der Innenbeutel bei diesem Vorgang nicht beschädigt wird, sollten Stifte verwendet werden, die glatte gerundete Kopfenden haben.

Es hat sich außerdem gezeigt, dass ein verhältnismäßig kleiner Überdruck zum Ablösen des Innenbeutels ausreicht, während bei herkömmlichen Ablöseverfahren ein etwa doppelt so großer Überdruck angewendet wird. Wenn das Ablösen durch Unterdruck in dem Innenbeutel erfolgt, wird mit Vorteil ein geringer Unterdruck in dem Innenbeutel erzeugt.

Weiter wird mit Vorteil vorgeschlagen, dass die ersten beiden Verfahrensschritte in einer Schneidstation einer Ablöseanlage ausgeführt werden. Hierzu enthält die Schneidstation nach einem weiteren Gesichtspunkt der Erfindung Mittel zum Antrieb zweier Messer, vorzugsweise Hohlmesser, um die Löcher in den Außenbehälter zu schneiden, sowie Mittel zum Vorschub zweier Stifte, vorzugsweise Auswerferstifte, die durch die Löcher eines in der Schneidstation fixierten Behälters eingeführt werden.

Der abschließende Ablösevorgang wird in einer Ablösestation der Ablöseanlage ausgeführt, wobei die Ablöseanlage an die Blasanlage angebunden sein sollte, damit noch nicht vollständig ausgekühlte Behälter in der Ablöseanlage weiterverarbeitbar sind.

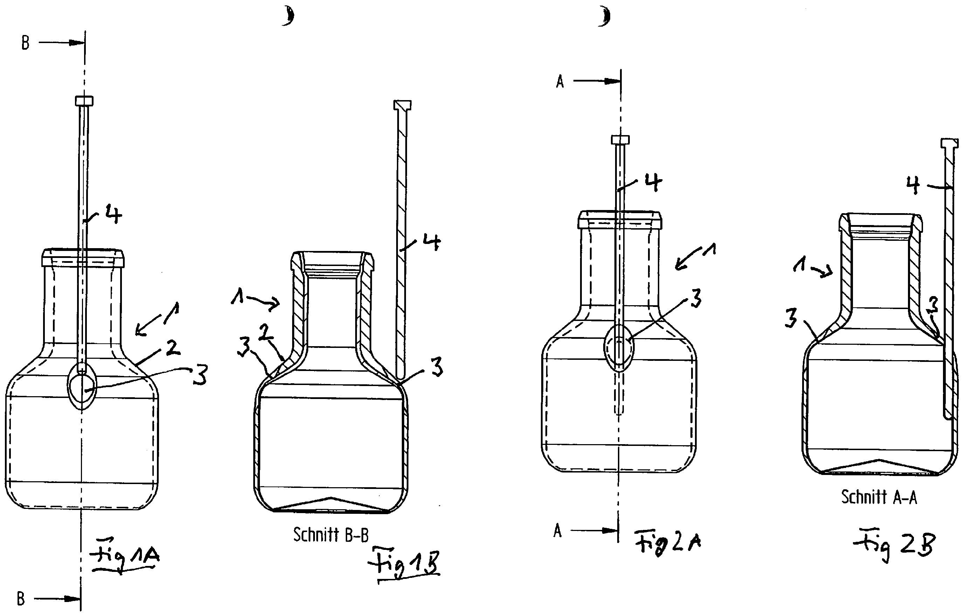

Figur 1A zeigt in einer Seitenansicht einen Außenbehälter 1 mit einem am unteren Randbereich des Schulterabschnitts 2 in den Außenbehälter 1 geschnittenes Loch 3. Die Schnittdarstellung B-B der Figur 1B zeigt, dass zwei solche Löcher 3 einander diametral gegenüber liegend in den unteren Randbereich des Schulterabschnitts 2 geschnitten sind. Über den Löchern 3 ist ein Auswerferstift 4 in einer Ausgangsposition dargestellt.

In Figur 2A ist der Stift 4 durch ein Loch zwischen den Innenbeutel und den Außenbehälter vorgeschoben, wodurch der Innenbeutel in diesem Bereich von der Innenwand des Außenbehälters abgelöst ist. Dies ist in Figur 2B im Schnitt A-A dargestellt.

## Patentansprüche

1. Verfahren zur Herstellung eines verwendungsfähigen Behälters bestehend aus einem steifen Außenbehälter und einem verformbaren Innenbeutel, wobei ein erster Schneckenförderer einen ersten thermoplastischen Kunststoff für den Außenbehälter und wenigstens ein zweiter Schneckenförderer wenigstens einen zweiten thermoplastischen Kunststoff für den Innenbeutel einem Extruder zuführen, der einen Vorformling koextrudiert, der zwischen den geöffneten Hälften einer Blasform einer Blasanlage angeordnet wird, wobei die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus Material des Außenbehälters ausgebildet wird, in dem die verschweißte Bodennaht des Innenbeutels eingeklemmt ist, und wobei der Vorformling durch ein Druckmedium zur Anlage an die Wandung der Blasform aufgeblasen, das überschüssige Material unter der Schweißnaht abgeschlagen und der Behälter aus der Blasform entnommen wird,
**gekennzeichnet durch** folgende Schritte:
a) Wenigstens zwei vorzugsweise diametral gegenüber liegende Löcher (3) werden am unteren Randbereich des Schulterabschnitts (2) in den Außenbehälter (1) geschnitten;
b) Stifte (4) werden durch die Löcher (3), vorzugsweise vertikal, zwischen den Innenbeutel und dem Außenbehälter eingeführt, um den Innenbeutel von der Innenwand des Außenbehälters anzulösen;
c) Ein Überdruck (8) wird von außen durch die Löcher (3) auf den Innenbeutel ausgeübt und/oder ein Unterdruck (7) wird in dem Innenbeutel erzeugt, um den Innenbeutel von der Innenwand des Außenbehälters (1) abzulösen.

2. Verfahren nach Anspruch 1,
**dadurch gekennzeichnet,**
**dass** die Stifte (4) eine kurze Strecke von etwa 5 bis 15 mm zwischen den Innenbeutel und den Außenbehälter eingeführt werden.

3. Verfahren nach Anspruch 1 oder 2,
**dadurch gekennzeichnet,**
**dass** Stifte (4) mit gerundeten Kopfenden verwendet werden.

4. Verfahren nach einem der Ansprüche 1 bis 3,
**dadurch gekennzeichnet,**
**dass** außen ein Überdruck aufgebracht wird.

5. Verfahren nach einem der Ansprüche 1 bis 4,
**dadurch gekennzeichnet,**
**dass** in dem Innenbeutel ein Unterdruck aufgebracht wird.

6. Verfahren nach einem der Ansprüche 1 bis 5,
**dadurch gekennzeichnet,**
**dass** die Schritte a) und b) in einer Schneidstation einer Ablöseanlage ausgeführt werden.

7. Verfahren nach einem der Ansprüche 1 bis 6,
**dadurch gekennzeichnet,**
**dass** Schritt c) in einer Ablösestation der Ablöseanlage ausgeführt wird.

## Claims

1. Method for producing a usable container consisting of a rigid outer container and a deformable inner bag, wherein a first screw conveyor feeds a first thermoplastic plastics material for the outer container and at least one second screw conveyor feeds at least one second thermoplastic plastics material for the inner bag to an extruder which co-extrudes a preform which is placed between the open halves of a blow mould of a blow-moulding apparatus, the blow mould being closed once the preform has the length necessary for the production of the container, wherein excess material in the base region of the container being produced is pinched off and a web composed of material of the outer container is formed in which the welded base seam of the inner bag is clamped, and wherein the preform is inflated by a pressure medium so as to make contact with the wall of the blow mould, the excess material below the welded seam is cut off and the container is removed from the blow mould,
**characterised by** the following steps:
a) at least two preferably diametrically opposed holes (3) are cut in the outer container (1) at the lower edge region of the shoulder portion (2);
b) pins (4) are inserted through the holes (3), preferably vertically, between the inner bag and the outer container in order to initiate detachment of the inner bag from the inner wall of the outer container;
c) an elevated pressure (8) is exerted on the inner bag from the outside through the holes (3) and/or a reduced pressure (7) is generated in the inner bag in order to detach the inner bag from the inner wall of the outer container (1).

2. Method according to claim 1,
**characterised in that**
the pins (4) are inserted a short distance of about from 5 to 15 mm between the inner bag and the outer container.

3. Method according to claim 1 or 2,
**characterised in that**
pins (4) having rounded head ends are used.

4. Method according to any one of claims 1 to 3,
**characterised in that**
an elevated pressure is applied externally.

5. Method according to any one of claims 1 to 4,
**characterised in that**
a reduced pressure is applied in the inner bag.

6. Method according to any one of claims 1 to 5,
**characterised in that**
steps a) and b) are performed in a cutting station of a detaching apparatus.

7. Method according to any one of claims 1 to 6,
**characterised in that**
step c) is performed in a detaching station of the detaching apparatus.

## Revendications

1. Procédé de fabrication d'un récipient prêt à utiliser se composant d'un récipient extérieur rigide et d'un sac interne déformable, dans lequel un premier transporteur à vis achemine une première matière thermoplastique pour le récipient extérieur et au moins un second transporteur à vis au moins achemine une seconde matière thermoplastique pour le sac interne à une extrudeuse qui coextrude une ébauche qui est agencée entre les moitiés ouvertes d'un moule de soufflage d'une installation de soufflage, dans lequel le moule de soufflage est fermé, lorsque l'ébauche présente la longueur nécessaire à la fabrication du récipient, dans lequel du matériau excédentaire est pressé dans la zone de fond du récipient à fabriquer et une nervure est réalisée en matériau du récipient extérieur, dans lequel le cordon de fond soudé du sac interne est serré, et dans lequel l'ébauche est soufflée par un moyen sous pression pour l'installation contre la paroi du moule de soufflage, le matériau excédentaire est coupé sous le cordon de soudure et le récipient est retiré du moule de soufflage,
**caractérisé par** les étapes de procédé suivantes :
a) au moins deux trous (3) se trouvant de préférence diamétralement à l'opposé sont découpés au niveau de la zone de bord inférieure de la section d'épaulement (2) dans le récipient extérieur (1) ;
b) des tiges (4) sont introduites à travers les trous (3), de préférence verticalement entre le sac interne et le récipient extérieur afin d'attaquer le sac interne de la paroi intérieure du récipient extérieur ;
c) une surpression (8) est exercée depuis l'extérieur par les trous (3) sur le sac interne et/ou une dépression (7) est générée dans le sac interne afin de détacher le sac interne de la paroi intérieure du récipient extérieur (1).

2. Procédé selon la revendication 1,
**caractérisé en ce que**
les tiges (4) sont introduites sur une courte distance d'environ 5 à 15 mm entre le sac interne et le récipient extérieur.

3. Procédé selon la revendication 1 ou 2,
**caractérisé en ce que**
des tiges (4) avec des extrémités de tête arrondies sont utilisées.

4. Procédé selon l'une quelconque des revendications 1 à 3,
**caractérisé en ce que**
une surpression est appliquée à l'extérieur.

5. Procédé selon l'une quelconque des revendications 1 à 4,
**caractérisé en ce que**
une dépression est appliquée dans le sac interne.

6. Procédé selon l'une quelconque des revendications 1 à 5,
**caractérisé en ce que**
les étapes a) et b) sont réalisées dans une station de découpe d'une installation de détachement.

7. Procédé selon l'une quelconque des revendications 1 à 6,
**caractérisé en ce que**
l'étape c) est réalisée dans une station de découpe de l'installation de détachement.
